(19) Europäisches Patentamt
European Patent Office
Office européen des brevets

(11) **EP 4 424 412 A1**

(12) **EUROPEAN PATENT APPLICATION**

(43) Date of publication:
**04.09.2024   Bulletin 2024/36**

(21) Application number: **23166506.8**

(22) Date of filing: **04.04.2023**

(51) International Patent Classification (IPC):
***B01J 13/00*** *(2006.01)*

(52) Cooperative Patent Classification (CPC):
**B01J 13/0095**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **01.03.2023   US 202363449101 P**

(71) Applicant: **Catalytic Instruments GmbH & Co. KG**
**83026 Rosenheim (DE)**

(72) Inventors:
• **Boies, Adam M.**
  **Cambridge, CB4 1JD (GB)**

• **Kale, Akshay S.**
  **Cambridge, CB3 1AT (GB)**
• **Swanson, Jacob**
  **Richfield, MN, 55423 (US)**
• **Schulz, Hans-Joachim**
  **83024 Rosenheim (DE)**
• **Berger, Vinicius**
  **83620 Feldkirchen-Westerham (DE)**

(74) Representative: **Epping - Hermann - Fischer**
**Patentanwaltsgesellschaft mbH**
**Schloßschmidstraße 5**
**80639 München (DE)**

(54) **APPARATUS, ARRANGEMENT AND METHOD FOR THE PRODUCTION OF AN AEROSOL OF CHARGED NANOPARTICLES**

(57)    An apparatus (1) for the production of an aerosol of charged nanoparticles, the apparatus comprises a charging device (10) comprising an inlet (12) for nanoparticles and an outlet (14), the charging device (10) being configured to charge the nanoparticles, and an electrically conductive tube (20) comprising an input port (22) and an output port (14), the input port (22) being arranged at the outlet (14) of the charging device (10), a length l of the tube (20) being at least 2.5 times a cross-sectional inner diagonal d of the tube (20).

FIG 1

## Description

The present invention relates to an apparatus and an arrangement for the production of an aerosol of charged nanoparticles. It further relates to a method for producing an aerosol of charged nanoparticles.

BACKGROUND OF THE INVENTION

Charged aerosols are used in a wide variety of applications such as electrostatic painting, industrial filtration using electrostatic precipitators, PPE filtration technology for respirators, surface coating, inactivating viruses for therapeutic purposes, fog elimination, chemical processing, and calibration of aerosol instruments. Consequently, generating a constant supply of number concentration of charged particles in an aerosol is crucial to ensure a stable operation and performance of these applications. However, the number concentration of charged particles generated by the state of art technologies in the market is highly sensitive to the changes in the input number concentrations of uncharged particles, thereby creating a currently unmet need of achieving a stable performance of charged particle generators.

Patent application DE 19846656 A1 describes a charging device and a method for charging particles in an aerosol.

An object to be achieved is to provide an apparatus and an arrangement for the production of an aerosol of charged nanoparticles with a stable number concentration. A further object is to provide a method for producing an aerosol of charged nanoparticles with a stable number concentration.

These objects are achieved with the subject-matter of the independent claims. Further developments and embodiments are described in dependent claims.

SUMMARY OF THE INVENTION

Here and in the following, the term "aerosol" refers to a suspension of particles in a gas. The particles in the aerosol can either be solid or liquid. The size of the particles in the aerosol can vary widely, depending on the specific product and the method used to create the suspension. In particular, the particles can be nanoparticles with diameters in the range of 3 nm to 1000 nm. Nanoparticles can be made of a wide range of materials, including metals, metal oxides, polymers, and biological substances. In the following, the terms "particles" and "nanoparticles" may be used interchangeably. The type of gas used in aerosols can vary depending on the specific product and the intended application. In many cases, aerosols contain a mixture of gases, including air and a propellant. Other types of gases, such as compressed air or liquefied gases are also possible.

An apparatus for the production of an aerosol of charged nanoparticles is provided.

In an at least one embodiment of the apparatus for the production of an aerosol of charged nanoparticles, the apparatus comprises a charging device. The charging device comprises an inlet for nanoparticles and an outlet. The charging device is configured to charge the nanoparticles.

The charging device is configured to accept uncharged nanoparticles, e.g. from a particle generator. This can mean that uncharged nanoparticles contained in an aerosol are passed into the charging device via the inlet of the charging device. In other words, the inlet brings the uncharged nanoparticles and a flow of gas (e.g. air) into the charging device. The number concentration of the uncharged nanoparticles can be controlled depending upon the operation of the particle generator. The number concentration of the uncharged nanoparticles at the inlet of the charging device can be referred to as input number concentration in the following. The charging device may comprise a flow channel for the nanoparticles that are directed into the charging device. The flow channel may extend from the inlet to the outlet of the charging device.

For example, the charging device is a unipolar charging device. However, it is also possible that the charging device is a bipolar charging device. Thus, the charging device may charge the nanoparticles in a unipolar or a bipolar manner. For example, charging the nanoparticles is provided through a corona discharge. A corona discharge is a process in which an electric field ionizes a gas. Thus, the charging unit may comprise a corona wire within an ion generation zone. The corona wire may be centrally located in the charging device, wherein an annular ion generation zone is formed by the electric field of the corona wire. The charging device may further comprise at least one electrode to accelerate ions of the ionized gas towards a charging zone. The charging device may comprise further electrodes. The charging zone may located in the flow channel. That means that the charging zone may be a region of the flow channel. The ionization of the gas (e.g. air) deposits charges on the surfaces of the uncharged nanoparticles in the charging zone. The number of charges per nanoparticle is a function of its surface area (and hence its diameter). Thus, nanoparticles in the flow channel are charged.

As more and more nanoparticles are charged, the electric field induced within the charging zone by the particles starts to superimpose upon the corona electric field, and the particles start to undergo electrostatic repulsion within the charging zone as well as the downstream region of the charging device. Hence, some particles will be lost to the walls of the charging device in this process before reaching the outlet.

The charged nanoparticles are passed to the outlet of the charging device via the flow channel. The outlet is arranged downstream from the charging zone. The charging device may comprise more than one outlet. The outlet may be implemented as exit channel. In an example, the outlet is formed by an annular exit channel. In one embodiment, the charged nanoparticles are passed towards the outlet without redirecting the flow of the nanoparticles. For example, the flow channel merges into the exit channel without bending. This can mean that the flow channel and the exit channel are parallel to each other. Thus, less particles are lost to the walls of the charging device and the particle penetration is improved.

In at least one embodiment, the apparatus further comprises an electrically conductive tube. The tube comprises an input port and an output port. The input port is arranged at the outlet of the charging device.

The tube may be fixed to the charging device by fixing means. For example, the tube is fixed to the charging device by clamps, adhesives, welding, flanges, screws and/or threaded connections. The fixing means may hermitically, i.e. without leakage, connect the charging device to the tube. The outlet of the charging device may merge into the input port of the tube. If the outlet is implemented as exit channel the exit channel can run in parallel to the tube. The tube's inner diagonal may be adapted to the diameter/diagonal of the outlet/exit channel of the charging device. Thus, the exit channel and the tube may have corresponding diameters. Thus, less particles are lost to the walls of the charging device and the particle penetration is improved. The tube comprises an electrically conductive material. For example, the tube is a metallic tube. This can mean that the tube comprises a metal. The output port of the tube is configured to provide the aerosol of charged nanoparticles. The charged nanoparticles in the aerosol have a predetermined number concentration. The number concentration of the charged nanoparticles at the output port of the tube may be referred to as output number concentration.

In at least one embodiment a length l of the tube is at least 2.5 times a cross-sectional inner diagonal d of the tube.

The length of the tube refers to its main axis of extension. The cross-sectional inner diagonal of the tube refers to a direction that runs perpendicular to the tube's main axis of extension. Further, the cross-sectional inner diagonal of the tube refers to the lateral extent of the tube's opening, i.e. without the tube's wall. The ratio between the length l and the inner diagonal d may be called aspect ratio of the tube in the following.

The tube may further comprise a flow developing region. The flow developing region may be arranged at the input port of the tube. This can mean that the flow developing region occupies a finite tube length at the entrance of the tube i.e. at the junction of the charging device and the tube. By means of the flow developing region the aerosol flow hydrodynamically develops inside the tube. For low Reynolds numbers the flow developing region may form a small region of the tube. In particular, the flow developing region can be shorter than the length of the rest of the tube. The flow developing region can be disregarded when determining the length of the tube.

The tube performs the function of providing a long controlled path length for the stabilization of the charge and mass transport dynamics of the nanoparticles. Since the tube is electrically conductive it can act as a sink to the particle charges as the particles are lost to the walls. Charged particles entering the tube continuously undergo diffusion losses through standard mass transport and electrostatic repulsion of like charges of the particles, causing them to spread out increasingly uniformly inside the tube downstream of the aerosol flow. In other words, during the transport through the tube, the charged particles undergo a combined diffusion and electrostatic repulsion and move continuously away from each other. The wall of the tube acts as a sink to the particles as well as their charges, thereby decreasing their number concentration as the particles flow increasingly downstream. The apparatus provides a long path length for the transport of the charged particles in a controlled flow of gas. An appropriate tube geometry can be correlated with the input number concentration of particles in order to establish a balance between the rate of particle loss to the wall and the rate of further increase in the input number concentration. This leads to a stable output number concentration of the charged particles at the output port of the tube.

In an at least one embodiment of the apparatus for the production of an aerosol of charged nanoparticles the apparatus comprises a charging device comprising an inlet for nanoparticles and an outlet, the charging device being configured to charge the nanoparticles, and an electrically conductive tube comprising an input port and an output port, the input port being arranged at the outlet of the charging device, a length l of the tube being at least 2.5 times a cross-sectional inner diagonal d of the tube.

In at least one embodiment, the tube comprises a uniform cross-section.

This can mean the cross-sectional inner diagonal of the tube does not change along the main axis of extension of the tube. Its uniform cross-section can increase control over the aerosol flow velocity, number concentration and electric field. In particular, a uniform tube cross-section affects the Reynolds number of the system, as it determines the flow resistance.

In at least one embodiment, the tube comprises a circular cross-section. That is, the tube can be a cylindrical tube with an inner diameter corresponding to the inner diagonal. Alternatively, the tube comprises a polyangular, in particular rectangular, cross-section. For example, the tube's cross-section is square. Advantageously, the tube can possess a cross-section of any (uniform) shape for conserving the physical principles behind this disclosure.

In at least one embodiment, the charging device is configured to positively or negatively charge the nanoparticles with at least 0.5 charge states per nanoparticle on average. As mentioned above, the number of charges per nanoparticle is based on its surface area. The larger the nanoparticle the more charges can be deposit on the nanoparticle. The charge of the nanoparticle may be a positive charge or it may be a negative charge. At least 0.5 charge states per nanoparticle can mean that at least each second nanoparticle is charged. Advantageously, the charging device can charge a high number of nanoparticles, so that a high number concentration of charged nanoparticles is generated.

In at least one embodiment, a wall of the tube is configured to serve as an electrode, which is held at an electrical potential.

This can mean that the wall of the tube is electrically connected to an electrical potential. As mentioned above, the wall is electrically conductive, such that it can form an electrode. The electrical potential may be a ground potential (GND). However, it is also possible that the electrical potential is different from ground. In particular, the electrical potential may be different from a grounded input port and/or grounded output port of the tube. This can mean that a reference electrode is arranged at the input port and/or the output port of the tube. A reference electrode can also be arranged at a different position along the main axis of the tube. Therefore, the charged nanoparticles inside the tube can be manipulated by means of an external electrical field. The electrical field can be constant or changing in time.

In at least one embodiment the length l of the tube is at least 15 times the cross-sectional inner diagonal d of the tube. Alternatively, the length l of the tube is at least 20 times the cross-sectional inner diagonal d of the tube.

A tube's length that is at least 15 or at least 20 times the tube's inner diagonal aims to lead to a more stable and nearly input-independent output number concentration of charged nanoparticles. Specifically, for a given axial coordinate at and above 15 times the tube' inner diagonal (and for a varying input number concentration above a given threshold), the sensitivity in the output number concentration is seen to not increase substantially, for example not more than 3%. Advantageously, the apparatus can be used in a plethora of applications where a fluctuation-free performance matters. Further, the output number concentration can be predetermined based on the aspect ratio of the tube. The longer the tube compared to the tube's inner diagonal the more particles are lost to the tube's wall due to diffusion and repulsion processes. Thus, the output number concentration decrease for a given input number concentration. This can be used to control the output number concentration.

In at least one embodiment, the apparatus is configured to by operated in a regime where

$$\frac{V_s}{\beta} > 60$$

, wherein $V_S$ is the non-dimensional charged nanoparticle mobility and $\beta$ is defined as

$$\beta = \frac{2 \cdot l}{d \cdot Pe_m}$$ , with $Pe_m$ being the mass Péclet number.

The Péclet number is defined as the ratio of advective transport rate and diffusive transport rate. For mass transfer, it is the product of the Reynolds number and the Schmidt number. $V_S$ can be defined mathematically as

$$\frac{Z \cdot N_{Ref} \cdot p \cdot e \cdot L_{Ref}}{\varepsilon_f \cdot U_{Ref}}$$ and can be viewed as a non-dimensional parameter which quantifies the strength of the electrical repulsion relative to the advection transport that carries the particles with the aerosol flow. $N_{Ref}$, $U_{Ref}$ and $L_{Ref}$ may be viewed as reference scales for particle number concentration, aerosol flow velocity and a geometric dimension, respectively. These parameters can be chosen from a set of parameters one can control experimentally. The parameter p is the number of charges per particles, e is the fundamental charge of an electron, Z is the electrical mobility of the particles, and $\varepsilon_f$ is the electric permittivity of air. Hence,

$$\frac{V_s}{\beta}$$ may be viewed as the relative strength of the electrical repulsion effect on the particle motion with respect to the mass diffusion effect. For scenarios encountering high number concentrations of particles, it is possible to have very large values of $V_S$ for which $\frac{V_s}{\beta}$ exceeds 60. For a threshold value of $\frac{V_s}{\beta}$ above 60, for example at least 70 or at least 80 or at least 200, a more stable output number concentration of particles can be achieved. In one embodiment, the apparatus is configured to by operated in a regime where $$\frac{V_s}{\beta} \geq$$

$$\frac{20|\ln(P_D)|}{\beta(1-P_D)}$$ , wherein $P_D$ is the diffusion based particle penetration (see below).

Furthermore, an arrangement for the production of an aerosol of charged nanoparticles is provided.

In at least one embodiment, the arrangement for the production of an aerosol of charged nanoparticles comprises the apparatus of the production of an aerosol of charged nanoparticles. All features disclosed for the apparatus are also disclosed for the arrangement and vice versa.

In at least one embodiment, the arrangement further comprises a particle generator arranged at the inlet of the charging device. The particle generator is configured to generate nanoparticles for passing them to the inlet of the charging device.

The particle generator can be connected to the inlet via a further tube. The particle generator and the further tube can be fixed to the inlet of the charging device by fixing means similar to the fixing means described above. The particle generator may be configured to generate particles of the desired mean mobility diameter to be charged inside the charging device. The particles generated by the particle generator can be metallic or non-metallic. For example, the nanoparticles are silver nanoparticles. Further, the particles generated by the particle generator can be spheroid nanoparticles or can be agglomerates of spheroid nanoparticles. In one embodiment, the particle generator is the particle generator described in the patent application EP 19165884.8 the disclosure of which is hereby incorporated by reference.

In at least one embodiment, the arrangement further comprises a particle counting device arranged at the output port of the tube. The particle counting device is configured to count the nanoparticles at the output port.

In an example, the particle counting device is implemented as an electronic readout system for measuring/monitoring the particle number concentration, in particular the output number concentration. For example, the particle counting device is a condensation particle counter (CPC) or an electrometer. The particle counting device may be arranged in the tube or in a region outside the tube. The particle counting device is arranged in the vicinity of the output port, which means that it is arranged closer to the output port than to the input port. In particular, the particle counting device may be arranged downstream from the output port.

Furthermore, a method for producing an aerosol of charged nanoparticles is provided. The apparatus and the arrangement can preferably be employed in the methods described herein. This means all features disclosed for the apparatus and for the arrangement are also disclosed for the method for producing the aerosol of charged nanoparticles and vice-versa.

According to at least one embodiment of the method for producing an aerosol of charged nanoparticles, the method comprises providing a charging device that comprises an inlet for nanoparticles and an outlet.

According to at least one embodiment of the method, the method further comprises providing an electrically conductive tube that comprises an input port and an output port. In an embodiment, a length l of the tube being at least 2.5 times a cross-sectional inner diagonal d of the tube.

According to at least one embodiment of the method, the method further comprises arranging the input port of the tube at the outlet of the charging device. Arranging the tube to the outlet of the charging device may comprise using fixing means as described above.

According to at least one embodiment of the method, the method further comprises charging nanoparticles by means of the charging device. For example, charging the nanoparticles can be performed through a corona discharge. For example, the nanoparticles can be charged in a unipolar or a bipolar manner. Charging the nanoparticles can be conducted in a charging zone of the charging device.

According to at least one embodiment of the method, the method further comprises passing the charged nanoparticles through the outlet to the output port of the tube. For example, the charged nanoparticles are passed to the outlet via a flow channel. The nanoparticles form an aerosol flowing through the flow channel. The flow channel may merge into an exit channel forming the outlet, where the tube is arranged. Passing the charged nanoparticles to the output port of the tube may comprise hydrodynamically developing a flow inside the tube. For that, a flow developing region may be arranged at the input port of the tube. For example, the flow developing region changes the aerosol flow from an annular cross-section (due to an annular cross-section of the outlet of the charging device) to a cross-section corresponding to the cross-section of the tube (e.g. circular). The flow developing region may be part of the tube. It is also possible that the flow developing region is implemented as separate structure, e.g. as a further tube or a mesh, that is arranged between the outlet of the charging device and the input port of the tube. The flow developing region may comprise a further tube and/or a mesh.

The tube performs the function of providing a long controlled path length for the stabilization of the charge and mass transport dynamics of the nanoparticles in the aerosol. Thus, the method provides a long path length for the transport of the charged nanoparticles in a controlled flow of the aerosol. An appropriate tube geometry can be correlated with the input number concentration of particles in order to establish a balance between the rate of particle loss to the wall and the rate of further increase in the input number concentration. This leads to a stable output number concentration of the charged particles at the output port of the tube.

According to at least one embodiment of the method for producing an aerosol of charged nanoparticles, the method comprises providing a charging device comprising an inlet for nanoparticles and an outlet; providing an electrically conductive tube comprising an input port and an output port, a length l of the tube being at least 2.5 times a cross-sectional inner diagonal d of the tube; arranging the input port of the tube at the outlet of the charging device; charging nanoparticles by means of the charging device; and passing the charged nanoparticles through the outlet to the output port of the tube.

According to at least one embodiment of the method, the method further comprises selecting an aspect ratio of the tube based on a predetermined output number concentration of charged nanoparticles at the output port of the tube.

It may be desired to predefine the output number concentration at the output port of the tube. The output number concentration is a function of the tube's aspect ratio, since the wall of the tube acts as a sink to the particles as well as their charges, thereby decreasing their number concentration as the particles flow increasingly downstream. Thus, by selecting the tube's length and inner diagonal the output number concentration can be controlled.

According to at least one embodiment of the method, the method further comprises generating nanoparticles by means of a particle generator and passing the nanoparticles to the inlet of the charging device.

For example, the nanoparticles are generated by evaporating a precursor material through heating the precursor material by a heating device comprised by the particle generator. As the evaporated precursor material condenses in a gas an aerosol comprising nanoparticles is formed. The particle generator may generate uncharged nanoparticles. Generating the nanoparticles may be a continuous process. The uncharged nanoparticles may be passed to the inlet of the charging device via a further tube that connects the charging device to the particle generator. The uncharged nanoparticles are part of an aerosol. An aerosol flow is established from the particle generator to the charging device. For example, the flow is established through diffusion and/or through a controlled gas flow. The gas flow is established, for example, by pumping the gas.

According to at least one embodiment of the method, the particle generator generates nanoparticles at a number concentration of at least $10^4$ particles per $cm^3$ at a flowrate of at least 100 milliliters per minute and at most 30 liters per minute.

The number concentration of nanoparticles generated by the particle generator can be referred to as input number concentration. The particle generator may be configured to generate nanoparticles up to a number concentration of $10^6$, $10^7$, $10^8$, $10^9$ or $5\cdot10^9$ per $cm^3$. Thus, the charging device may be configured to charge nanoparticles at a high number concentration. The nanoparticles are dispensed in a volume of gas, thus forming an aerosol of uncharged nanoparticles. However, the particle generator may be affected by fluctuations in the input number concentration. Further, by charging the nanoparticles there might be a loss of particles to the wall of the charging device and the tube due to electrostatic repulsion processes. It has been found that a stable and nearly input-independent output concentration can be achieved by appropriate design of the tube.

According to at least one embodiment of the method, the particle generator generates nanoparticles with mobility diameters of at least 3 nm and at most 1000 nm, or mobility diameters of at least 15 nm and at most 75 nm.

The term mobility diameter refers to the size of the nanoparticles. For spherical particles the mobility diameter is equivalent to the volumetric diameter. For particles that are not spherical, the mobility diameter is dependent on both the shape and orientation of the particle. This is because it is the cross-sectional area that is perpendicular to the direction of particle movement which determines the resistance the particle experiences, and therefore its electrical mobility. The mobility diameter, in this case, represents the effective size of the particle for the purposes of calculating its electrical mobility.

The generated particles can have non-dimensional Schmidt numbers ranging from 2000 to 10000 for the above defined size range. Further, the generated particles can be metallic or non-metallic. For example, the particles comprise silver. The generated nanoparticles can be spheroids or agglomerates of spheroid primary nanoparticles. Advantageously, the particle generator can generate nanoparticles with different properties regarding size, shape, concentration and material.

According to at least one embodiment of the method, the particle generator generates nanoparticles at a number concentration of at least $\frac{20}{P_D}$ times and at most 1000 times a predetermined number concentration of charged nanoparticles at the output port of the tube, wherein $P_D$ is the diffusion based particle penetration.

Diffusion-based particle penetration refers to the movement of particles through a medium due to diffusion, which is the random thermal motion of molecules and particles. Particles can diffuse through a medium due to differences in concentration, leading to a net flow of particles from the high concentration side to the low concentration side. This process is driven by the natural tendency of particles to distribute evenly throughout a medium in order to reach a state of thermodynamic equilibrium.

As mentioned above, the number concentration of the nanoparticles generated by the particle generator can be referred to as input number concentration. Thus, the particle generator may be configured to generate nanoparticles at an input number concentrating of at least $\frac{20}{P_D}$ times a predetermined output number concentration. This input number concentration may be viewed as threshold input number concentrating. The inventors found that above the threshold input number concentration the balance between the rate of loss of particles to the tube wall and the rate of further increase in the particle influx into the tube can be further enhanced, such that the output number concentration is more stable. This can mean that with the input concentration maintained above the threshold, the charged particles exit at a nearly constant, input-independent number concentration, even if the input number concentration reaches a value of about 1000 times the predetermined output number concentration. For example, the sensitivity in the output number concentration may increase not more than 3%.

In other words, an even more stable output number concentrations can be seen to be lower than the corresponding threshold input number concentrations by a factor of $\frac{20}{P_D}$.

This observation can be physically explained by the effect produced on the particle transport by the parameters $V_S$ and $\beta$ (or $Pe_m$) as defined above. For a given value of mass Péclet number and a given tube geometry (aspect ratio), the parameter $\beta$ completely governs the convective-diffusive mass transport (and hence diffusive penetration). However, as $V_S$ increases at a given diffusive penetration, the contribution of the electrical migration-induced losses to the tube walls also increases. Consequently, the balance between the rate of influx of number concentration (or charge) and the rate of loss of particles to the wall occurs at a lower input number concentration strength for a higher $V_S$. Consequently, this leads to a lower output number concentration. Similarly, for a given strength of electrical migration loss contributions and a given tube geometry, a higher Péclet number results in a more dominant convection mass transport of the particles, thereby enabling particles to propagate forward to the output port of the tube at a higher output number concentration.

BRIEF DESCRIPTION OF THE DRAWINGS

The following description of figures may further illustrate and explain exemplary embodiments. Components that are functionally identical or have an identical effect are denoted by identical references. Identical or effectively identical components might be described only with respect to the figures where they occur first. Their description is not necessarily repeated in successive figures.

Figure 1     shows a cross section through an exemplary embodiment of the apparatus for the production of an aerosol of charged nanoparticles.

Figure 2     shows a cross section through another exemplary embodiment of the apparatus for the production of an aerosol of charged nanoparticles.

Figure 3     3 shows an exemplary embodiment of an arrangement for the production of an aerosol of charged nanoparticles.

Figure 4     describes an exemplary embodiment of the method for producing an aerosol of charged nanoparticles.

Figure 5     shows simulation results of output number concentrations for a set of parameters.

DETAILED DESCRIPTION

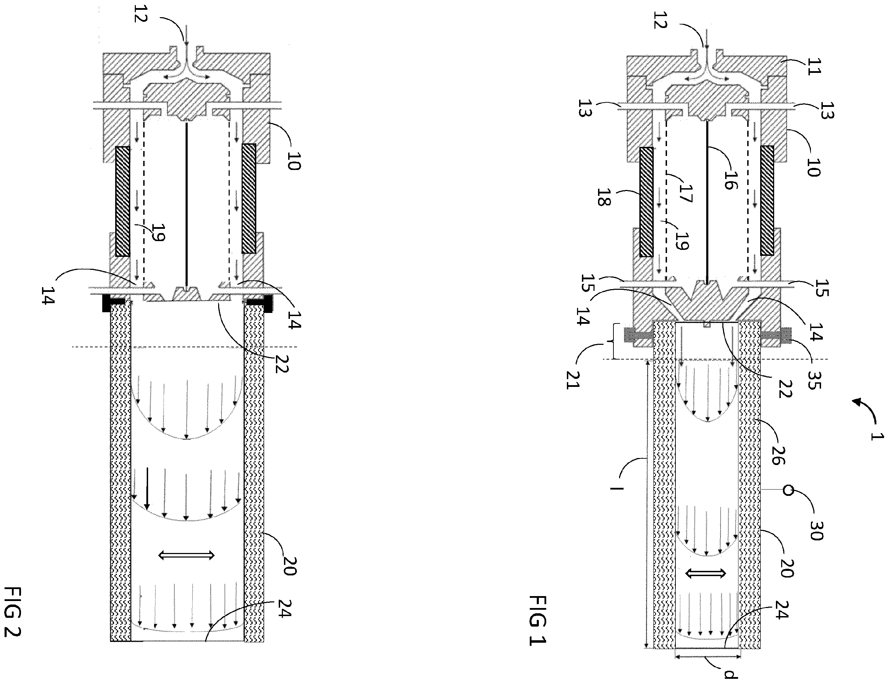

In figure 1 a cross-section through an embodiment of an apparatus 1 for the production of an aerosol of charged nanoparticles is shown. The scaling of the shown embodiment should not be taken as exact indication. The apparatus 1 comprises a charging device 10 comprising an inlet 12 for nanoparticles and an outlet 14, the charging device 10 being configured to charge the nanoparticles. The apparatus 1 further comprises an electrically conductive tube 20 comprising an input port 22 and an output port 14, the input port 22 being arranged at the outlet 14 of the charging device 10, a length l of the tube 20 being at least 2.5 times a cross-sectional inner diagonal d of the tube 20.

The shown charging device 10 is a unipolar diffusion aerosol charging device 10. The unipolar charging device 10 is only represented as example, and the proposed mechanism is expected for to work for bipolar charging devices as well. The charging device 10 is configured to positively or negatively charge the nanoparticles with at least 0.5 charge states per nanoparticle on average. The charging device 10 comprises a housing 11. The housing 11 may comprise a metallic material. The housing 11 comprises an opening that forms the inlet 12. The inlet 12 brings uncharged nanoparticles and a flow of gas (e.g. air) into the charging device 10 at a controlled input number concentration which depends upon the operation of the particle generator 40 (not shown in figure 1). A corona wire 16 is located centrally in the charging device 10. An ion generation zone is formed around the corona wire 16. The charging device 10 further comprises an inner electrode 17 and an outer electrode 18. The inner electrode 17 may be perforated, as shown in figure 1. The electrodes 17, 18 are configured to accelerate ionized gas molecules from the ion generation zone outwards and towards a flow channel where an aerosol of uncharged nanoparticles streams. The flow channel is indicated by arrows. The ionization of the air deposits charges on the surfaces of the uncharged particles. Thus, a region of the flow channel forms a charging zone 19. The flow channel and thus the charging zone 19 can be formed annularly around the ion generation zone and the corona wire 16. The flow channel merges into an exit channel which forms the outlet 14 of the charging device 10. In the housing 11 input openings 13 and output openings 15 for sheath air are implemented. The sheath air is configured to keep the corona wire 16 clean and to provide a gas filter prior to the corona discharge.

The tube 20 according to figure 1 can be a cylindrical tube 20. However, the cylindrical tube is only represented as example, and the proposed mechanism is expected to work for non-circular cross-sections as well. For example, the tube 20 may have a poly-angular, in particular rectangular or square, cross-section. The shown cross-section is uniform that means it does not change along the axis of the tube 20. The tube's wall 26 may comprise a metallic material. The tube's inner diagonal d is adapted to the outlet 14 of the charging device 10. That means that a diameter of the outlet 14 correlates with the inner diagonal d of the tube 20. The tube 20 is fixed to the charging device 10 by fixing means 35. The tube 20 comprises a flow developing region 21 at the input port 22 of the tube 20. The flow developing region 21 is provided for the air flow to hydrodynamically develop inside the tube cross-section. Consequently, parabolic velocity and number concentration profiles for the charged aerosol inside the tube are indicated in figure 1 by arrows near the input port 22 of the tube 20. The velocity and number concentration profiles change along the axis of the tube 20, as during the transport through the tube 20 the nanoparticles in the aerosol undergo a combined diffusion and electrostatic repulsion and move continuously away from each other. Thus, the profiles are flattened at the output port 24 of the tube 20. In the shown example, the flow developing region is part of the tube or it forms a tube extension or it forms a separate tube between the outlet and the input port of the tube. It is also possible (but not shown) that the flow developing region comprises a mesh. The wall 26 of the tube 20 acts as a sink to the particles as well as their charges, thereby decreasing their number concentration as the particles flow downstream. Figure 1 shows that the tube's wall 26 can be used as electrode that is electrically connected to an electrical potential 30. However, serving as electrode is optional. The electrical potential can be ground or a potential different than ground. A reference electrode (not shown) may be arranged elsewhere along the axis of the tube 20. As such, the charged nanoparticles inside the tube 20 can be manipulated by means of an external electrical field.

Figure 2 shows a cross-section through another embodiment of an apparatus 1 for the production of an aerosol of charged nanoparticles. The embodiment according to figure 2 is different from the embodiment according to figure 1 in that the flow channel, the exit channel and the channel formed by the tube 20 run in parallel. That means that the bends existing in the downstream section of the charging device 10 shown in figure 1 are removed so that the annular path of aerosol flow directly merges with the tube 20. This improves the particle penetration compared to the design with bends according to figure 1, since the particle loss to the walls/ housing 11 of the charging device 10 is reduced. However, this requires to ensure that the outer diameter of the charging zone 19 annulus is aligned to the tube's inner diagonal d.

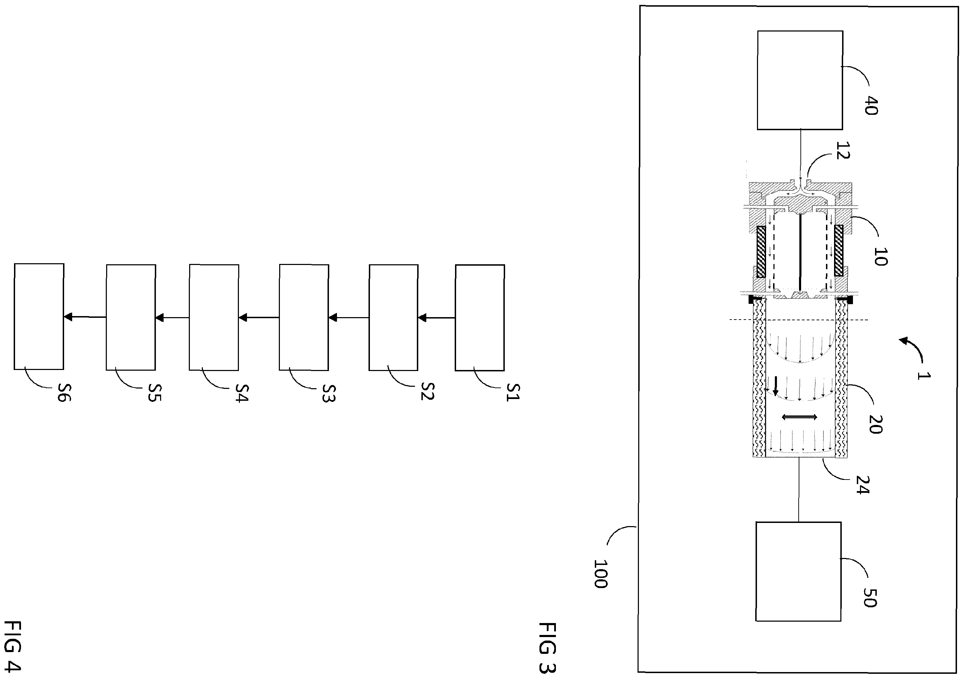

Figure 3 shows an arrangement 100 for the production of an aerosol of charged nanoparticles. The arrangement 100 comprises the apparatus 1 according to figure 2. Additionally the arrangement 100 comprises a particle generator 40 arranged at the inlet 12 of the charging device 10. For example, the particle generator 40 is connected to the charging device 10 by means of a further tube (not shown). Furthermore, the arrangement 100 according to figure 3 further comprises a particles counting device 50 arranged at the output port 24 of the tube 20.

With figure 4 an exemplary embodiment of the method for producing an aerosol of charged nanoparticles is described. The method comprises the following steps that are not necessarily carried out in this order but can be carried out in this order.

In a first step S1 nanoparticles are generated by means of a particle generator 40. The first step S1 may comprise generating the nanoparticles at a number concentration of at least $10^4$ particles per $cm^3$ at a flow-rate of at least 100 milliliters per minute and at most 30 liters per minute. Moreover, the first step may comprise generating nanoparticles with mobility diameters of at least 3 nm and at most 1000 nm, or mobility diameters of at least 15 nm and at most 75 nm. Moreover, the first step S1 may comprise generating nanoparticles at a number concentration of at least $20/P_D$ times and at most 1000 times a predetermined number concentration of charged nanoparticles at the output port 24 of the tube 20, wherein $P_D$ is the diffusion based particle penetration. The first step S1 may further comprise passing the nanoparticles to an inlet 12 of a charging device 10.

In a second step S2 a charging device is provided that comprises an inlet 12 for nanoparticles and an outlet 14. In a third step S3 an electrically conductive tube 20 comprising an input port 22 and an output port 24 is provided, a length l of the tube 20 being at least 2.5 times a cross-sectional inner diagonal d of the tube 20. The third step S3 may comprise selecting an aspect ratio of the tube 20 based on a predetermined output number concentration of charged nanoparticles at the output port 24 of the tube 20. In a fourth step S4 the input port 22 of the tube 20 is arranged at the outlet 14 of the charging device 10. In a fifth step S5 the nanoparticles are charged by means of the charging device 10. In a sixth step S6 the charged nanoparticles are passed through the outlet 14 to the output port 24 of the tube 20. The method may be performed in a regime where $V_S/\beta > 60$, wherein $V_S$ and $\beta$ are defined and explained above.

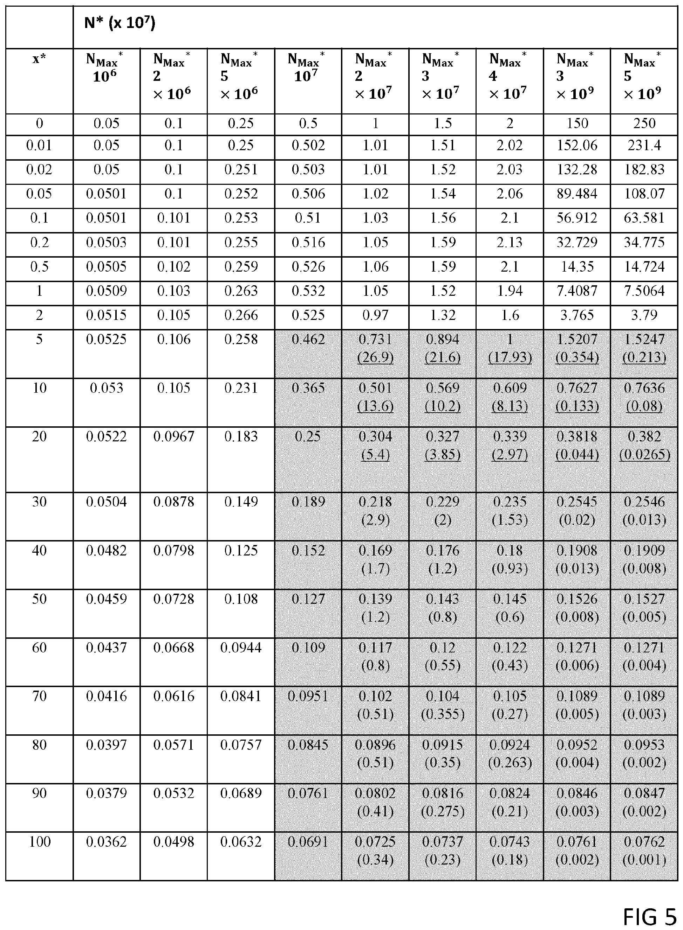

In figure 5 simulation results are shown for a non-dimensional output number concentration N*. The non-dimensional output number concentration N* shown is the area averaged particle number concentration in a cylindrical tube 20 with a length l that is 100 times longer than the tube radius (radius = d/2), as a function of the non-dimensional axial coordinate x* (i.e. x* = x/radius with x being the axial position along the length l; x* defines the local aspect ratio of the tube). However, the results shown are in principle also valid for other tube geometries. A family of data for multiple non-dimensional center-line input number concentrations $N_{max}$* are tabulated. The values of $V_S$ and the mass Péclet number are chosen as $10^{-8}$ and $10^5$, respectively, by way of example. The analytical threshold input number concentration $N_{max,threshold}$* for this data falls around $1.0 \cdot 10^7$ to $1.5 \cdot 10^7$, around and above which the dependence on the input number concentration is seen to reduce, thereby leading to a nearly input-invariant output number concentration N*, particularly for any given x* above 5 (i.e. where the length l of the tube is 2.5 times larger than the tube's inner diagonal d). The quantities in brackets next to the data from the grey cells indicate the percentage change in the output number concentration N* relative to the increase in the input number concentration $N_{max}$*. Specifically, for a given axial coordinate x* at and above 30 and for an input number concentration $N_{max}*$ exceeding $\sim 10^7$, the sensitivity in the output number concentration $N*$ is seen to increase not more than 3%.

The embodiments of the apparatus 1, the arrangement 100 and the method for producing an aerosol of charged nanoparticles disclosed herein have been discussed for the purpose of familiarizing the reader with novel aspects of the idea.

Although preferred embodiments have been shown and described, many changes, modifications, equivalents and substitutions of the disclosed concepts may be made by one having skill in the art without unnecessarily departing from the scope of the claims.

It will be appreciated that the disclosure is not limited to the disclosed embodiments and to what has been particularly shown and described hereinabove. Rather, features recited in separate dependent claims or in the description may advantageously be combined. Furthermore, the scope of the disclosure includes those variations and modifications, which will be apparent to those skilled in the art and fall within the scope of the appended claims.

The term "comprising", insofar it was used in the claims or in the description, does not exclude other elements or steps of a corresponding feature or procedure. In case that the terms "a" or "an" were used in conjunction with features, they do not exclude a plurality of such features. Moreover, any reference signs in the claims should not be construed as limiting the scope.

Reference numerals

| 1 | apparatus |
|---|---|
| 10 | charging device |
| 11 | housing |
| 12 | inlet |
| 13 | input opening |
| 14 | outlet |
| 15 | output opening |
| 16 | corona wire |
| 17 | inner electrode |
| 18 | outer electrode |
| 19 | charging zone |
| 20 | input port |
| 21 | flow developing region |
| 22 | input port |
| 24 | output port |
| 26 | wall |
| 30 | electrical potential |
| 35 | fixing means |
| 40 | particle generator |
| 50 | particle counting device |
| 100 | arrangement |
| d | diagonal |
| l | length |
| N* | non-dimensional output number concentration |
| $N_{max}*$ | non-dimensional input number concentration |
| S1-S6 | steps |
| x* | non-dimensional axial coordinate |

**Claims**

1. Apparatus (1) for the production of an aerosol of charged nanoparticles, the apparatus comprising:

   - a charging device (10) comprising an inlet (12) for nanoparticles and an outlet (14), the charging device (10) being configured to charge the nanoparticles, and
   - an electrically conductive tube (20) comprising an input port (22) and an output port (14), the input port (22) being arranged at the outlet (14) of the charging device (10), a length l of the tube (20) being at least 2.5 times a cross-sectional inner diagonal d of the tube (20).

2. Apparatus (1) according to claim 1, wherein the tube (20) comprises a uniform cross-section.

3. Apparatus (1) according to one of claims 1 to 2, wherein the tube (20) comprises a circular cross-section, or wherein the tube (20) comprises a poly-angular, in particular rectangular, cross-section.

4. Apparatus (1) according to one of claims 1 to 3, wherein the charging device (10) is configured to positively or negatively charge the nanoparticles with at least 0.5 charge states per nanoparticle on average.

5. Apparatus (1) according to one of claims 1 to 4, wherein a wall (26) of the tube (20) is configured to serve as an electrode, which is held at an electrical potential (30).

6. Apparatus (1) according to one of claims 1 to 5, wherein the length l of the tube is at least 15 times the cross-sectional inner diagonal d of the tube, or wherein the length l of the tube is at least 20 times the cross-sectional inner diagonal d of the tube.

7. Apparatus (1) according to one of claims 1 to 6, wherein the apparatus (1) is configured to by operated in a regime where $V_S/\beta > 60$, wherein $V_S$ is the non-dimensional charged nanoparticle mobility and $\beta$ is defined as $\beta = 2 \cdot l / d \cdot Pe_m$, with $Pe_m$ being the mass Péclet number.

**8.** Arrangement (100) for the production of an aerosol of charged nanoparticles, comprising:

> - the apparatus (1) according to one of claims 1 to 7, and
> - a particle generator (40) arranged at the inlet (12) of the charging device (10), the particle generator (40) being configured to generate nanoparticles for passing them to the inlet (12) of the charging device (10).

**9.** Arrangement (100) according to claim 8, further comprising a particle counting device (50) arranged at the output port (24) of the tube (20), the particle counting device (50) being configured to count the nanoparticles at the output port (24).

**10.** Method for producing an aerosol of charged nanoparticles, the method comprising:

> - providing (S2) a charging device (10) comprising an inlet (12) for nanoparticles and an outlet (14),
> - providing (S3) an electrically conductive tube (20) comprising an input port (22) and an output port (24), a length l of the tube (20) being at least 2.5 times a cross-sectional inner diagonal d of the tube (20),
> - arranging (S4) the input port (22) of the tube (20) at the outlet (14) of the charging device (10),
> - charging (S5) nanoparticles by means of the charging device (10), and
> - passing (S6) the charged nanoparticles through the outlet (14) to the output port (24) of the tube (20).

**11.** Method according to claim 10, further comprising selecting an aspect ratio of the tube (20) based on a predetermined output number concentration of charged nanoparticles at the output port (24) of the tube (20).

**12.** Method according to one of claims 10 to 11, further comprising generating (S1) nanoparticles by means of a particle generator (40) and passing the nanoparticles to the inlet (12) of the charging device (10).

**13.** Method according to claim 12, wherein the particle generator (40) generates nanoparticles at a number concentration of at least $10^4$ particles per $cm^3$ at a flowrate of at least 100 milliliters per minute and at most 30 liters per minute.

**14.** Method according to one of claims 12 to 13, wherein the particle generator (40) generates nanoparticles with mobility diameters of at least 3 nm and at most 1000 nm, or mobility diameters of at least 15 nm and at most 75 nm.

**15.** Method according to one of claims 12 to 14, wherein the particle generator (40) generates nanoparticles at a number concentration of at least $\frac{20}{P_D}$ times and at most 1000 times a predetermined number concentration of charged nanoparticles at the output port (24) of the tube (20), wherein $P_D$ is the diffusion based particle penetration.

FIG 1

FIG 2

FIG 3

FIG 4

| | N* (×10⁷) | | | | | | | | |
|---|---|---|---|---|---|---|---|---|---|
| $x^*$ | $N_{Max}^*$ $10^6$ | $N_{Max}^*$ $2 \times 10^6$ | $N_{Max}^*$ $5 \times 10^6$ | $N_{Max}^*$ $10^7$ | $N_{Max}^*$ $2 \times 10^7$ | $N_{Max}^*$ $3 \times 10^7$ | $N_{Max}^*$ $4 \times 10^7$ | $N_{Max}^*$ $3 \times 10^9$ | $N_{Max}^*$ $5 \times 10^9$ |
| 0 | 0.05 | 0.1 | 0.25 | 0.5 | 1 | 1.5 | 2 | 150 | 250 |
| 0.01 | 0.05 | 0.1 | 0.25 | 0.502 | 1.01 | 1.51 | 2.02 | 152.06 | 231.4 |
| 0.02 | 0.05 | 0.1 | 0.251 | 0.503 | 1.01 | 1.52 | 2.03 | 132.28 | 182.83 |
| 0.05 | 0.0501 | 0.1 | 0.252 | 0.506 | 1.02 | 1.54 | 2.06 | 89.484 | 108.07 |
| 0.1 | 0.0501 | 0.101 | 0.253 | 0.51 | 1.03 | 1.56 | 2.1 | 56.912 | 63.581 |
| 0.2 | 0.0503 | 0.101 | 0.255 | 0.516 | 1.05 | 1.59 | 2.13 | 32.729 | 34.775 |
| 0.5 | 0.0505 | 0.102 | 0.259 | 0.526 | 1.06 | 1.59 | 2.1 | 14.35 | 14.724 |
| 1 | 0.0509 | 0.103 | 0.263 | 0.532 | 1.05 | 1.52 | 1.94 | 7.4087 | 7.5064 |
| 2 | 0.0515 | 0.105 | 0.266 | 0.525 | 0.97 | 1.32 | 1.6 | 3.765 | 3.79 |
| 5 | 0.0525 | 0.106 | 0.258 | 0.462 | 0.731 (26.9) | 0.894 (21.6) | 1 (17.93) | 1.5207 (0.354) | 1.5247 (0.213) |
| 10 | 0.053 | 0.105 | 0.231 | 0.365 | 0.501 (13.6) | 0.569 (10.2) | 0.609 (8.13) | 0.7627 (0.133) | 0.7636 (0.08) |
| 20 | 0.0522 | 0.0967 | 0.183 | 0.25 | 0.304 (5.4) | 0.327 (3.85) | 0.339 (2.97) | 0.3818 (0.044) | 0.382 (0.0265) |
| 30 | 0.0504 | 0.0878 | 0.149 | 0.189 | 0.218 (2.9) | 0.229 (2) | 0.235 (1.53) | 0.2545 (0.02) | 0.2546 (0.013) |
| 40 | 0.0482 | 0.0798 | 0.125 | 0.152 | 0.169 (1.7) | 0.176 (1.2) | 0.18 (0.93) | 0.1908 (0.013) | 0.1909 (0.008) |
| 50 | 0.0459 | 0.0728 | 0.108 | 0.127 | 0.139 (1.2) | 0.143 (0.8) | 0.145 (0.6) | 0.1526 (0.008) | 0.1527 (0.005) |
| 60 | 0.0437 | 0.0668 | 0.0944 | 0.109 | 0.117 (0.8) | 0.12 (0.55) | 0.122 (0.43) | 0.1271 (0.006) | 0.1271 (0.004) |
| 70 | 0.0416 | 0.0616 | 0.0841 | 0.0951 | 0.102 (0.51) | 0.104 (0.355) | 0.105 (0.27) | 0.1089 (0.005) | 0.1089 (0.003) |
| 80 | 0.0397 | 0.0571 | 0.0757 | 0.0845 | 0.0896 (0.51) | 0.0915 (0.35) | 0.0924 (0.263) | 0.0952 (0.004) | 0.0953 (0.002) |
| 90 | 0.0379 | 0.0532 | 0.0689 | 0.0761 | 0.0802 (0.41) | 0.0816 (0.275) | 0.0824 (0.21) | 0.0846 (0.003) | 0.0847 (0.002) |
| 100 | 0.0362 | 0.0498 | 0.0632 | 0.0691 | 0.0725 (0.34) | 0.0737 (0.23) | 0.0743 (0.18) | 0.0761 (0.002) | 0.0762 (0.001) |

FIG 5

**EUROPEAN SEARCH REPORT**

Europäisches Patentamt
European Patent Office
Office européen des brevets

Application Number

EP 23 16 6506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/072395 A1 (DEKATI OY [FI]) 4 May 2017 (2017-05-04) * claims 1, 10 * * page 20, line 23 – page 26, line 18 * * figures 4a-4b * | 1-15 | INV. B01J13/00 |
| X | INTRA P ET AL: "Progress in unipolar corona discharger designs for airborne particle charging: A literature review", JOURNAL OF ELECTROSTATICS, ELSEVIER SCIENCE PUBLISHERS B.V. AMSTERDAM, NL, vol. 67, no. 4, 1 July 2009 (2009-07-01), pages 605-615, XP026150997, ISSN: 0304-3886, DOI: 10.1016/J.ELSTAT.2008.12.018 [retrieved on 2009-01-24] * page 612 * * figure 12 * | 1-15 | |
| A | JANUSZ KULON ET AL: "A Bipolar Charge Measurement System for Aerosol Characterization", IEEE TRANSACTIONS ON INDUSTRY APPLICATIONS, IEEE SERVICE CENTER, PISCATAWAY, NJ, US, vol. 37, no. 2, 1 March 2001 (2001-03-01), XP011022941, ISSN: 0093-9994 * the whole document * | 1-15 | TECHNICAL FIELDS SEARCHED (IPC) B01J |

The present search report has been drawn up for all claims

| Place of search | Date of completion of the search | Examiner |
|---|---|---|
| The Hague | 23 August 2023 | Tarallo, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 6506

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2023

| Patent document cited in search report | | Publication date | Patent family member(s) | | Publication date |
|---|---|---|---|---|---|
| WO 2017072395 | A1 | 04-05-2017 | CN | 108369210 A | 03-08-2018 |
| | | | EP | 3368889 A1 | 05-09-2018 |
| | | | JP | 6755049 B2 | 16-09-2020 |
| | | | JP | 2018533020 A | 08-11-2018 |
| | | | US | 2018331510 A1 | 15-11-2018 |
| | | | WO | 2017072395 A1 | 04-05-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19846656 A1

- EP 19165884